# EUROPEAN PATENT APPLICATION

(11) **EP 4 064 438 A1**
(43) Date of publication of application: **28.09.2022**
(21) Application number: 20957978.8
(22) Date of filing: 19.10.2020
(51) Int. Cl.: H01M 50/383, H01M 50/375

(54) **BATTERY, ELECTRICAL APPARATUS, AND METHOD AND DEVICE FOR PREPARING BATTERY**

(71) Applicant: Jiangsu Contemporary Amperex Technology Limited, Liyang, Jiangsu 213300 (CN)
(72) Inventor: ZENG, Yuqun, Hangzhou, Jiangsu 213300 (CN); HU, Langchao, Hangzhou, Jiangsu 213300 (CN); HUANG, Xiaoteng, Hangzhou, Jiangsu 213300 (CN); HONG, Jiarong, Hangzhou, Jiangsu 213300 (CN); YANG, Haiqi, Hangzhou, Jiangsu 213300 (CN); WANG, Wenli, Hangzhou, Jiangsu 213300 (CN)
(74) Representative: Rowlands, Stuart Michael
(86) International application number: PCT/CN2020/121998
(87) International publication number: WO 2022/082395

(57) **Abstract**

This application relates to the field of battery technologies, and in particular, to a battery, an electric apparatus, and a method and device for preparing battery. This application is intended to resolve the problem of proneness to accidents due to difficult release of emissions during thermal runaway of a battery. The battery includes a battery cell, where the battery cell includes a pressure relief mechanism, and the pressure relief mechanism is configured to actuate release of internal pressure of the battery cell when the internal pressure or internal temperature of the battery cell reaches a threshold; and further includes a fire prevention chamber, a collection chamber, and an isolation member, where the isolation member is configured to isolate the fire prevention chamber from the collection chamber and allow passage of the emissions during actuation of the pressure relief mechanism, so that the emissions enter the collection chamber through the fire prevention chamber. An electric apparatus using such battery is also disclosed. The battery in embodiments of this application has beneficial effects of collecting the emissions generated in thermal runaway of the battery cell while implementing fire extinguishing, thereby reducing safety accidents.

## Description

### TECHNICAL FIELD

This application relates to the field of battery technologies, and in particular, to a battery, an electric apparatus, and a method and device for preparing battery.

### BACKGROUND

A battery is a core component for an apparatus using electrical energy as a driving energy source, and therefore ensuring safety of the battery is essential to safety of the entire apparatus. Thermal runaway of the battery is one of threats to the safety of the battery.

For current batteries, when thermal runaway occurs in one battery cell, emissions may be generated inside the battery cell. The emissions include high-temperature smoke (which causes open flame in severe cases), volatile high-temperature electrolyte, and the like. These emissions undergo thermal diffusion when being discharged to cause thermal runaway of other battery cells or even cause accidents such as explosion.

### SUMMARY

In order to control thermal runaway of a battery cell in a timely manner and reduce safety accidents, this application provides a battery, an electric apparatus, and a method and device for preparing battery.

A first aspect of this application provides a battery, including:
a battery cell, where the battery cell includes a pressure relief mechanism, and the pressure relief mechanism is configured to actuate release of internal pressure of the battery cell when the internal pressure or internal temperature of the battery cell reaches a threshold;
a fire prevention chamber, configured to accommodate a fire prevention medium, where the fire prevention chamber is constructed to release the fire prevention medium during actuation of the pressure relief mechanism, so that the fire prevention medium enters the battery cell;
a collection chamber, configured to collect emissions from the battery cell during actuation of the pressure relief mechanism, where the collection chamber is located at a side of the fire prevention chamber farther away from the battery cell; and
an isolation member, configured to isolate the fire prevention chamber from the collection chamber; where
the isolation member is constructed to allow passage of the emissions during actuation of the pressure relief mechanism, so that the emissions enter the collection chamber through the fire prevention chamber.

In some embodiments, the isolation member is constructed to be damaged by the emissions during actuation of the pressure relief mechanism, so that the emissions enter the collection chamber through the fire prevention chamber.

In some embodiments, the isolation member is provided with a weak portion, and the weak portion is constructed to be damaged by the emissions during actuation of the pressure relief mechanism.

In some embodiments, the weak portion is disposed opposite the pressure relief mechanism.

In some embodiments, the isolation member is provided with a through hole, and the through hole is constructed to allow the emissions to pass through the isolation member.

In some embodiments, the through hole is disposed opposite the pressure relief mechanism.

In some embodiments, the isolation member is constructed as a chamber wall that is shared by the fire prevention chamber and the collection chamber.

In some embodiments, the battery further includes:
a box housing, configured to accommodate the battery cell; and
a cover body, configured to connect to the box housing to encapsulate the battery cell; where
the fire prevention chamber, the collection chamber, and the isolation member are constructed as at least part of the cover body.

In some embodiments, the cover body is provided with a discharge channel, and the discharge channel is configured to guide the emissions to pass through the isolation member and enter the collection chamber.

In some embodiments, the discharge channel is disposed opposite the pressure relief mechanism.

In some embodiments, the fire prevention chamber is constructed to be damaged by the emissions when the emissions pass through the discharge channel, so as to release the fire prevention medium.

In some embodiments, the discharge channel is constructed as a groove, an opening of the groove is provided facing toward the pressure relief mechanism, and the emissions pass through the opening to enter the discharge channel.

In some embodiments, the groove has a bottom wall and a side wall connected to the bottom wall, the bottom wall is disposed opposite the pressure relief mechanism, and the side wall extends toward the pressure relief mechanism.

In some embodiments, the bottom wall is constructed as at least part of the isolation member, and the side wall is constructed as at least part of a chamber wall of the fire prevention chamber.

In some embodiments, the fire prevention chamber is constructed to be damaged by the emissions during actuation of the pressure relief mechanism, so as to release the fire prevention medium.

In some embodiments, the fire prevention chamber is disposed opposite the pressure relief mechanism.

In some embodiments, the fire prevention chamber includes an accommodating recess disposed opposite the pressure relief mechanism, and the accommodating recess is formed by recessing a chamber wall of the fire prevention chamber facing toward the pressure relief mechanism, so that the fire prevention medium flows toward the accommodating recess during actuation of the pressure relief mechanism.

In some embodiments, at least two accommodating recesses are provided, and two adjacent accommodating recesses communicate with each other.

In some embodiments, the battery further includes a thermal management component configured to adjust a temperature of the battery cell, and the thermal management component is constructed to communicate with the fire prevention chamber, so as to deliver the fire prevention medium to the fire prevention chamber.

A second aspect of this application provides an electric apparatus, including the battery in the foregoing embodiment, and the battery is configured to provide electrical energy.

A third aspect of this application provides a method for preparing battery, including:
providing a battery cell, where the battery cell includes a pressure relief mechanism, and the pressure relief mechanism is configured to actuate release of internal pressure of the battery cell when the internal pressure or internal temperature of the battery cell reaches a threshold;
providing a fire prevention chamber, where the fire prevention chamber is configured to accommodate a fire prevention medium, and the fire prevention chamber is constructed to release the fire prevention medium during actuation of the pressure relief mechanism, so that the fire prevention medium enters the battery cell;
providing a collection chamber, where the collection chamber is configured to collect emissions from the battery cell during actuation of the pressure relief mechanism, and the collection chamber is located at a side of the fire prevention chamber farther away from the battery cell; and
providing an isolation member, where the isolation member is configured to isolate the fire prevention chamber from the collection chamber; where
the isolation member is constructed to allow passage of the emissions during actuation of the pressure relief mechanism, so that the emissions enter the collection chamber through the fire prevention chamber.

A fourth aspect of this application provides a device for preparing battery, including:
a first device, configured to provide a battery cell, where the battery cell includes a pressure relief mechanism, and the pressure relief mechanism is configured to actuate release of internal pressure of the battery cell when the internal pressure or internal temperature of the battery cell reaches a threshold;
a second device, configured to provide a fire prevention chamber, where the fire prevention chamber is configured to accommodate a fire prevention medium, and the fire prevention chamber is constructed to release the fire prevention medium during actuation of the pressure relief mechanism, so that the fire prevention medium enters the battery cell;
a third device, configured to provide a collection chamber, where the collection chamber is configured to collect emissions from the battery cell during actuation of the pressure relief mechanism, and the collection chamber is located at a side of the fire prevention chamber farther away from the battery cell; and
a fourth device, configured to provide an isolation member, where the isolation member is configured to isolate the fire prevention chamber from the collection chamber; where
the isolation member provided by the fourth device is constructed to allow passage of the emissions during actuation of the pressure relief mechanism, so that the emissions enter the collection chamber through the fire prevention chamber.

The battery provided in this application is provided with the fire prevention chamber and the collection chamber that are adjacent in the cover body. The collection chamber is capable of releasing the pressure from the fire prevention medium in the fire prevention chamber, so as to prevent bulging or even explosion of the fire prevention chamber caused by continuous thermal runaway of the battery cell. In this way, the battery in the embodiments of this application can control thermal runaway of the battery cell in a timely manner to avoid further generating heat and high-temperature emissions. In addition, pressure release is implemented for the heat and emissions already generated by the battery cell, to avoid explosions caused by continuous accumulation of the heat and emissions in the box body and further avoid safety accidents.

### BRIEF DESCRIPTION OF DRAWINGS

FIG. 1-A is a schematic structural diagram of an electric apparatus according to an embodiment of this application.
FIG. 1-B is a schematic structural diagram of a battery in the related art.
FIG. 1-C is a schematic structural diagram of a battery module in the related art.
FIG. 1-D is a schematic structural diagram of a battery cell in the related art.
FIG. 2 is an exploded view of a battery according to an embodiment of this application.
FIG. 3 is an exploded view of a cover body.
FIG. 4 is a schematic cross-sectional structural diagram of a cover body and a battery cell in an assembled state.
FIG. 5 is a partially enlarged view of portion A of FIG. 4.
FIG. 6 is a schematic structural diagram of a plurality of accommodating recesses being not in communication with each other and with no reinforcing plate provided.
FIG. 7 is a cross-sectional view of section B-B in FIG. 6, where in order to clearly display the accommodating recess, the collection chamber and the isolation member are not shown in the figure.
FIG. 8 is a partially enlarged view of portion C of FIG. 7.
FIG. 9 is a schematic structural diagram of a plurality of accommodating recesses being in communication with each other and with a reinforcing plate provided.
FIG. 10 is a cross-sectional view of cross-section D-D in FIG. 9, where in order to clearly display the accommodating recess, the collection chamber and the isolation member are not shown in the figure.
FIG. 11 is a partially enlarged view of portion E of FIG. 10.
FIG. 12 is a schematic diagram of an isolation member according to an embodiment of this application.
FIG. 13 is a schematic diagram of an isolation member according to another embodiment of this application.
FIG. 14 is a schematic diagram of an isolation member according to another embodiment of this application.
FIG. 15 is a schematic diagram of an isolation member according to another embodiment of this application.
FIG. 16 is a flowchart of a method for preparing battery according to an embodiment of this application.
FIG. 17 is a schematic diagram of a device for preparing battery according to an embodiment of this application.

### Reference signs:

200. battery; 210. controller; 220. motor;
300. battery module; 201. first box body; 202. second box body; 30. electrode assembly; 301. tab; 10. end cover assembly; 10'. end cover plate; 20. connecting member; 40. injection member;
1. box housing; 2. cover body; 21. upper plate; 211. reinforcing plate; 212. side plate; 22. isolation member; 221. weak portion; 222. through hole; 23. lower plate; 231. accommodating recess; 24. collection chamber; 25. fire prevention chamber; 26. discharge channel; 261. bottom wall; 262. side wall; 27. valve; 3. battery cell; 31. housing; 32. electrode terminal; 33. pressure relief mechanism;
401. first device; 402. second device; 403. third device; 404. fourth device.

### DESCRIPTION OF EMBODIMENTS

To make the objectives, technical solutions, and advantages of this application clearer and more comprehensible, the following further describes this application in detail with reference to the accompanying drawings and embodiments. It should be understood that the specific embodiments described herein are merely intended to explain this application, and are merely examples of embodiments of this application, but are not intended to limit the protection scope of this application. All equivalent changes made based on structures, shapes, and principles of this application shall fall within the protection scope of this application.

Unless otherwise defined, all technical and scientific terms used herein shall have the same meanings as commonly understood by those skilled in the art to which this application belongs. The terms used in the specification of this application are merely intended to describe the specific embodiments but not intended to constitute any limitation on this application. The terms "include", "have" and any other variants in the specification, claims, and description of accompanying drawings of this application mean to cover the non-exclusive inclusion.

The term "embodiment" described herein means that specific features, structures, or characteristics in combination with descriptions of the embodiments may be incorporated in at least one embodiment of this application. The word "embodiment" appearing in various locations in the specification does not necessarily mean a same embodiment, and is neither an independent or alternative embodiment mutually exclusive with other embodiments. Persons skilled in the art explicitly and implicitly understand that the embodiments described herein may combine with other embodiments.

The term "and/or" in this specification describes only an association relationship for describing associated objects and represents that three relationships may exist. For example, A and/or B may represent the following three cases: A alone, both A and B, and B alone. In addition, the character "/" in this specification generally indicates that associated objects are in an "or" relationship.

In addition, the terms "first", "second" and the like in the specification, claims or description of accompanying drawings of this application are used to distinguish between different objects but not describe a specific sequence, and can explicitly or implicitly include one or more features.

In the descriptions of this application, unless otherwise specified, "a plurality of' means more than two (including two). Similarly, "a plurality of groups of' means more than two groups (including two groups).

In the descriptions of this application, it should be noted that, unless otherwise specified and defined explicitly, the terms "mounting", "interconnection", and "connection" should be understood in a broad sense. For example, the "interconnection" or "connection" of a mechanical structure may be a physical connection. For example, the physical connection may be a fixed connection, for example, a fixed connection by using a fastener, such as a fixed connection by using a screw, a bolt, or another fastener; or the physical connection may be a detachable connection, such as a clamping or buckling connection; or the physical connection may be an integrated connection, for example, a connection through welding, bonding, or integral molding. The "interconnection" or "connection" of a circuit structure may be a physical connection, or may be an electrical connection or a signal connection. For example, the "interconnection" or "connection" of the circuit structure may be a direct connection, that is, a physical connection; or may be an indirect connection through at least one intermediate element, provided that the circuit is connected; or may be an internal connection between two elements. The signal connection may be a signal connection through a circuit, or may be a signal connection through a medium, such as a radio wave. Persons of ordinary skill in the art can understand specific meanings of these terms in this application based on specific situations.

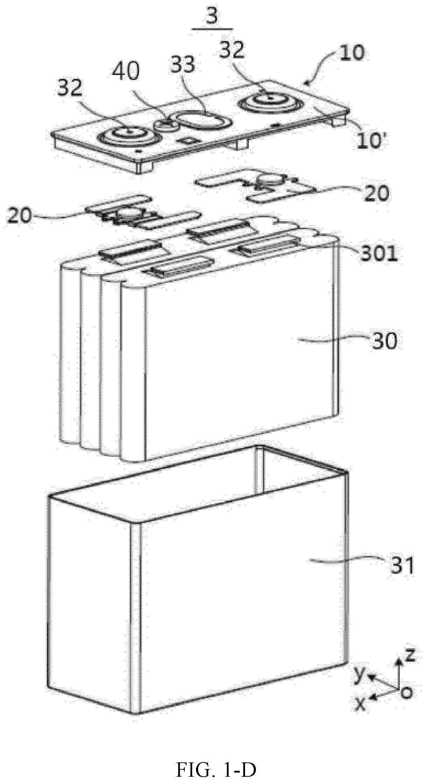

In order to clearly describe various orientations in the following embodiments, some orientation terms may be used, for example, a coordinate system shown in FIG. 1-D defines orientations of the battery 200. A direction X represents a length direction of the battery cell 3; a direction Y is perpendicular to the direction X in a horizontal surface, and indicates a width direction of the battery cell 3; a direction Z is perpendicular to the direction X and the direction Y, and indicates a height direction of the battery 200. In addition, the direction X, direction Y, and direction Z are intended to describe indication directions of operations and constructions of various components of the battery 200 are not absolute but relative. Such indications are appropriate when the components of the battery 200 are located at positions shown in the figures; however, when these positions change, such directions should be interpreted differently to reflect the changes.

Based on the same understanding of the orientations, in the description of this application, the orientations or positional relationships indicated by the terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential" are based on the orientations or positional relationships shown in the accompanying drawings, are merely intended to facilitate the descriptions of this application and simplify the descriptions, are not intended to indicate or imply that the apparatuses or components mentioned in this application must have specific orientations, or be constructed and operated for a specific orientation, and therefore shall not be construed as a limitation to this application.

The rechargeable battery may be referred to as a secondary battery or a traction battery. Currently, widely used rechargeable batteries are lithium ion batteries, for example, lithium-sulfur batteries, sodium lithium-ion batteries, or magnesium-ion batteries, which are not limited thereto. For ease of description, the rechargeable battery herein may be collectively referred to as a battery 200.

A safety property of the battery 200 is an important property to evaluate the battery 200. Safety of the battery 200 needs to be guaranteed to a maximum extent during use or charging.

The battery 200 generally includes a plurality of battery cells 3 that are connected and combined. When the battery cell 3 encounters external short-circuit, or is overcharged, spiked by a needle, struck by a plate, or the like, the battery cell 3 is prone to thermal runaway. Emissions may be generated inside the battery cell 3. The emissions include high-temperature smoke (which causes open flame in severe cases), volatile high-temperature electrolyte, and the like. These emissions undergo thermal diffusion when being discharged to cause thermal runaway of other battery cells 3 or even cause an accident such as an explosion.

Currently, an effective solution to thermal runaway of the battery cell 3 is to set up a fire prevention system. When thermal runaway occurs in the battery cell 3, the fire prevention system performs fire fighting to prevent or delay the battery cell 3 from exploding or catching fire.

The fire prevention system is generally disposed opposite a pressure relief mechanism 33 of the battery cell 3. For example, the fire prevention system may be disposed in the cover body 2 on the top of the box body 1 that accommodates the battery 200. For example, the cover body 2 is provided with a fire prevention chamber 25 that accommodates a fire prevention medium. When emissions from the battery cell 3 damage a chamber wall of the fire prevention chamber 25, the fire prevention medium flows out and enters the battery cell 3 while the emissions from the battery cell 3 may enter the fire prevention chamber 25.

However, the inventor found through long-term research that when a relatively large amount of emissions enters the fire prevention chamber 25 of the cover body 2, the cover body 2 is prone to safety problems such as swelling or even an explosion. This problem is mainly caused by the fact that the cover body 2 is generally made of non-metal or metal thin plates with low strength. In addition, the fire prevention chamber 25 has a relatively small volume. In the fire prevention process, the emissions and temperature inside the box body keep increasing, and sometimes the amount of emissions caused by thermal runaway rises so sharply that the volume of the fire prevention chamber 25 cannot meet emissions accommodating requirement.

A fire extinguishing agent is used in the related art to implement fire fighting for thermal runaway of the battery cell 3; however, the fire prevention chamber 25 cannot release the emissions that have been generated during thermal runaway. When the amount of emissions reaches a specific level, it may cause deformation of the box body, or even cause explosions and serious safety accidents in severe cases.

In view of this, this application provides a battery. For the fire prevention chamber 25 accommodating the fire prevention medium in the cover body 2, an adjacent collection chamber 24 is added to collect the emissions from the fire prevention chamber 25, achieving pressure relief effects. Therefore, the battery 200 provided in this application can control thermal runaway of the battery cell 3 in a timely manner to avoid further generating heat and high-temperature emissions. In addition, pressure release is implemented for the heat and emissions already generated by the battery cell 3, to avoid explosions caused by continuous accumulation of heat and emissions in the box body and further avoid safety accidents.

The battery 200 in this embodiment of this application can be applied to various electric apparatuses capable of using electrical energy as a power source. The electric apparatus herein may be not limited to an electric vehicle, an electric train, an electric bicycle, a golf cart, a ship, and the like. In addition, the electric apparatus may be an apparatus that uses only the battery 200 for power supply, or may be a hybrid electric apparatus. The battery 200 provides electrical energy for the electric apparatus, and drives the electric apparatus to travel through the motor.

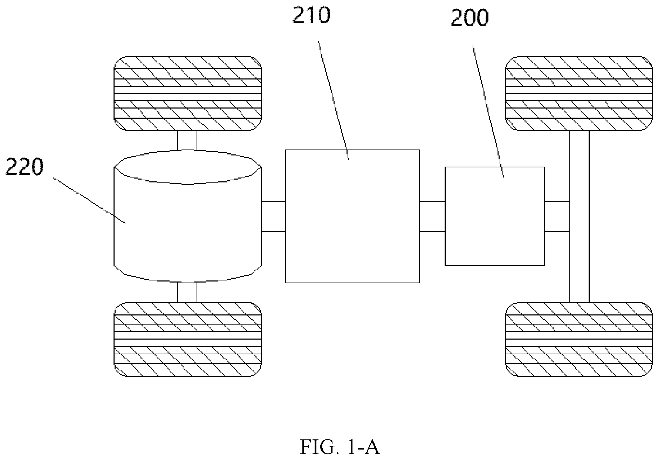

For example, FIG. 1-A is a schematic structural diagram of an electric apparatus according to an embodiment of the application. The electric apparatus may be a vehicle, and the vehicle may be a fossil fuel vehicle, a natural gas vehicle, or a new energy vehicle. The new energy vehicle may be a battery electric vehicle, a hybrid electric vehicle, an extended-range vehicle, or the like. The vehicle includes a battery 200, a controller 210, and a motor 220. The battery 200 is configured to supply power to the controller 210 and the motor 220 as an operating power source and a driving power source of the vehicle. For example, the battery 200 is configured to meet an operating power requirement of the vehicle during startup, navigation, and driving. For example, the battery 200 supplies power to the controller 210, and the controller 210 controls the battery 200 to supply power to the motor 220. The motor 220 receives and uses the power of the battery 200 as a driving power source for the vehicle, to replace or partially replace fossil fuel or natural gas to provide driving power for the vehicle.

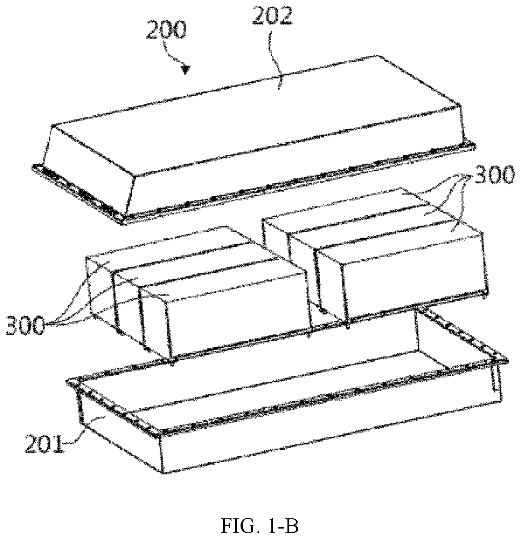

In order to make the battery 200 provide higher functions to meet usage requirements, the battery 200 may include a plurality of battery modules 300 electrically connected to each other. As shown in FIG. 1-B, the battery 200 includes a first box body 201, a second box body 202, and a plurality of battery modules 300. The first box body 201 and the second box body 202 are fastened together, and the plurality of battery modules 300 are arranged in a space enclosed by the first box body 201 and the second box body 202. In some embodiments, the first box body 201 and the second box body 202 are connected in a sealed manner.

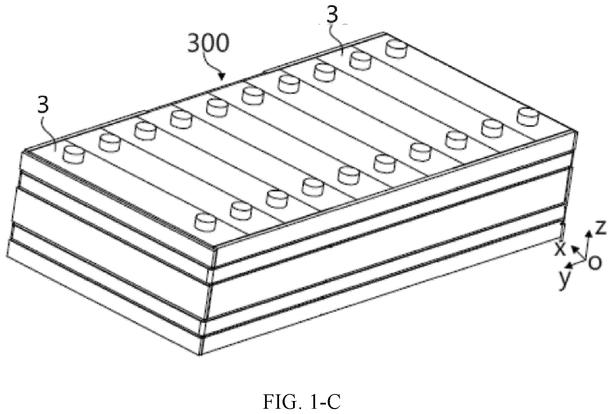

As shown in FIG. 1-C, the battery module 300 includes a plurality of battery cells 3, and the plurality of battery cells 3 may be electrically connected in a series, parallel, or hybrid manner to implement relatively large current or voltage. The hybrid connection refers to a combination of series connection and parallel connection. For example, as shown in FIG. 1-C, the battery cell 3 may be placed vertically, a height direction of the battery cell 3 is consistent with a vertical direction, and the plurality of battery cells 3 are arranged side by side in a width direction. Alternatively, the battery cell 3 may be placed flat, the width direction of the battery cell 3 is consistent with the vertical direction, the plurality of battery cells 3 may be stacked for at least one layer in the width direction, and each layer includes a plurality of battery cells 3 arranged in a length direction.

In order to make those skilled in the art clearly understand the improvements to this application, an overall structure of the battery cell 3 is first described.

As shown in FIG. 1-D, the battery cell 3 includes a housing 31, an electrode assembly 30, and an end cover assembly 10. The end cover assembly 10 includes an end cover plate 10', and the end cover plate 10' is connected (for example, welded) to the housing 31, to form an enclosure of the battery cell 3. The electrode assembly 30 is disposed in the housing 31, and the housing 31 is filled with electrolyte. The battery cell 3 may be of a cubic shape, a rectangular shape, or a cylindrical shape.

One or more electrode assemblies 30 may be provided based on an actual use requirement. As shown in FIG. 1-D, at least two independently wound electrode assemblies 30 may also be provided in the battery 200. A body portion of the electrode assembly 30 may be formed by winding or stacking a first electrode plate, a second electrode plate, and a separator located between the first electrode plate and the second electrode plate that are adjacent, where the separator is an insulator between the first electrode plate and the second electrode plate that are adjacent. In this embodiment, the first electrode plate being a positive electrode plate and the second electrode plate being a negative electrode plate are used as examples for description. A positive active material is applied on a coating area of the positive electrode plate, and a negative active material is applied on a coating area of the negative electrode plate. A plurality of uncoated areas extending from the coating areas of the body portion are stacked to form a tab 301. The electrode assembly 30 includes two tabs 301, namely a positive tab and a negative tab. The positive tab extends from the coating area of the positive electrode plate, and the negative tab extends from the coating area of the negative electrode plate.

The end cover assembly 10 is disposed on the top of the electrode assembly 30. As shown in FIG. 1-D, the end cover assembly 10 includes an end cover plate 10' and two electrode terminals 32, and the two electrode terminals 32 are a positive terminal and a negative terminal. Each electrode terminal 32 is correspondingly provided with a connecting member 20, and the connecting member 20 is located between the end cover plate 10' and the electrode assembly 30.

For example, in FIG. 1-D, the tab 301 of the electrode assembly 30 is located at the top, the positive tab is connected to the positive terminal through one connecting member 20, and the negative tab is connected to the negative terminal through the other connecting member 20. For example, the battery cell 3 may include two end cover assemblies 10, respectively disposed at two ends of the housing 31, and each end cover assembly 10 is provided with one electrode terminal 32.

The end cover plate 10' may be further provided with an explosion-proof member to release gas in the battery cell 3 in a timely manner in a case of too much gas in the battery cell 3, thereby avoiding explosion.

The end cover plate 10' is provided with a vent hole, and the vent hole may be provided at a middle position of the end cover plate 10' along the length direction. The explosion-proof member includes a pressure relief mechanism 33, and the pressure relief mechanism 33 is disposed in the vent hole. In a normal state, the pressure relief mechanism 33 is installed in the vent hole in a sealed manner. The pressure relief mechanism 33 is opened when the battery cell 3 swells to increase an air pressure in the enclosure to exceed a preset value, and the gas is released outward through the pressure relief mechanism 33.

The pressure relief mechanism 33 is an element or a component that can be actuated to release internal pressure and/or internal substances when the internal pressure or internal temperature of the battery cell 3 reaches a predetermined threshold. The pressure relief mechanism 33 may be specifically in a form of an explosion-proof valve, a gas valve, a pressure relief valve, a safety valve, or the like, and may specifically use a pressure-sensitive or temperature-sensitive element or structure. That is, when the internal pressure or temperature of the battery cell 3 reaches the predetermined threshold, the pressure relief mechanism 33 performs an action or a weak structure provided in the pressure relief mechanism 33 is damaged, to form an opening or a channel for releasing the internal pressure. The threshold described in this application may be a pressure threshold or a temperature threshold. Design of the threshold varies based on different design requirements, for example, the threshold may be designed or determined based on an internal pressure value or internal temperature value considered to be dangerous or out of control for the battery cell 3. In addition, the threshold may depend on a material of one or more of the positive electrode plate, the negative electrode plate, the electrolyte, and the separator in the battery cell 3.

"Actuate" described in this application means that the pressure relief mechanism 33 performs an action or is activated to a specific state, so that the internal pressure of the battery cell 3 can be relieved. The action performed by the pressure relief mechanism 33 may include but is not limited to: cracking, breaking, tearing, or opening at least part of the pressure relief mechanism 33, or the like. When the pressure relief mechanism 33 is actuated, high-pressure and high-temperature substances inside the battery cell 3 are released from an actuated part as emissions. In this way, the battery cell 3 can discharge its pressure under a condition of controllable pressure or temperature, thereby avoiding more serious potential accidents. The emissions from the battery cell 3 described in this application include but are not limited to: electrolyte, fragments of positive and negative electrode plates and separator because of dissolution or breaking, high-temperature and high-pressure gas and flames generated by reactions, and the like. The high-temperature and high-pressure emissions are released toward a side of the battery cell at which the pressure relief mechanism 33 is disposed, and may be more specifically released toward a region for actuation of the pressure relief mechanism 33. The strength and destructive power of such emissions are probably great, even great enough to break one or more structures in that direction.

In some embodiments, as shown in FIG. 1-D, the end cover plate 10' is provided with a through hole for injecting the electrolyte into the battery cell 3. The through hole may be a round hole, an elliptical hole, a polygonal hole, or holes of other shapes, and may extend along the height direction of the end cover plate 10'. The end cover plate 10 is provided with an injection member 40 for closing the through hole.

In order to resolve the foregoing problem of the battery 200 during use, a specific structure of the battery 200 provided in this application is described below.

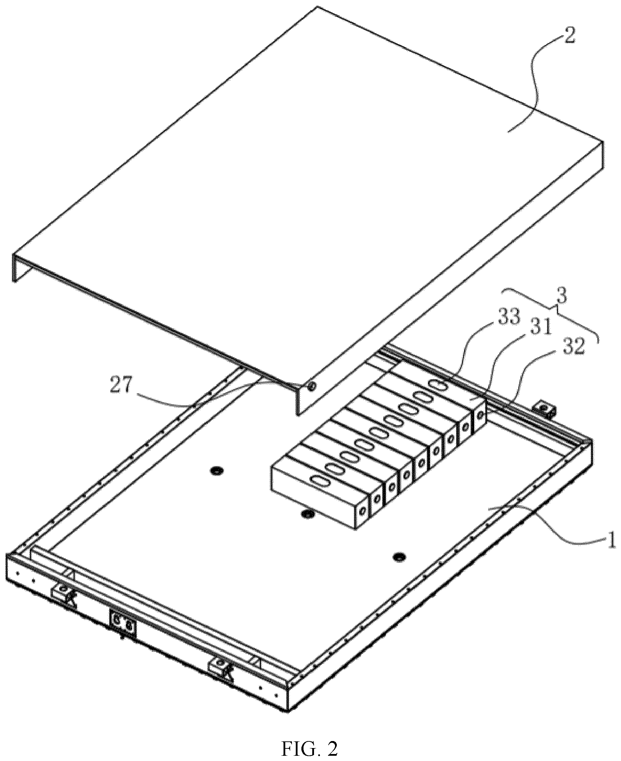

Referring to FIG. 2, the battery 200 includes: a box housing 1, a cover body 2, and at least one battery module 300. The box housing 1 has a hollow structure with an opening. The box housing 1 and the cover body 2 are combined at the opening to form a box body. The box body has an accommodating chamber for accommodating at least one battery module 300.

For example, the box housing 1 and the cover body 2 may be connected through welding, or by using a bolt or a screw, or through bonding, to form the box body for accommodating one or more battery modules 300. The opening at the top of the box housing 1 is used for fetching the battery module 300 during installation or replacement. The box housing 1 and the cover body 2 may be made of aluminum, aluminum alloy, or other metal materials.

The cover body 2 and the box housing 1 are connected in a sealed manner to close the opening of the box housing 1, thereby encapsulating the battery module 300 in the box body.

Referring to FIG. 2, the battery module 300 may include one or more battery cells 3. When the battery module 300 includes a plurality of battery cells 3, the plurality of battery cells 3 may be arranged according to a predetermined rule, for example, the plurality of battery cells 3 are arranged into a column along a straight line.

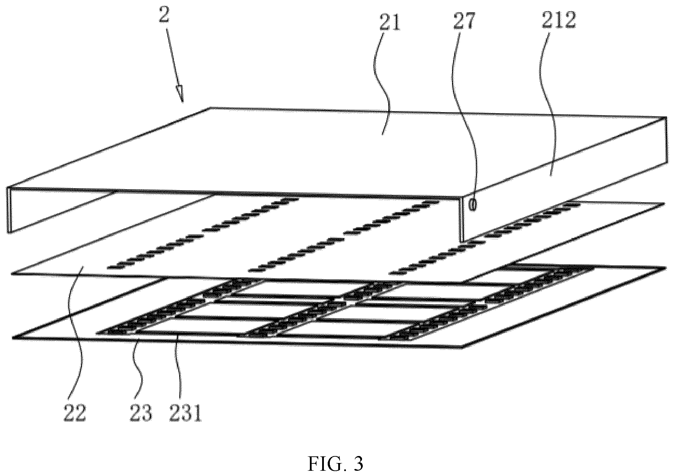

Referring to FIG. 3, FIG. 4, and FIG. 5, the cover body 2 in this embodiment of this application includes an upper plate 21, a lower plate 23, and an isolation member 22. The upper plate 21 is a panel of the cover body 2 farther away from the box housing 1, and the lower plate 23 is a panel of the cover body 2 close to the box housing 1. For example, the upper plate 21 and the lower plate 23 are approximately parallel. The upper plate 21 and the lower plate 23 enclose a chamber along with peripheral side plates 212. The isolation member 22 is used to divide the chamber into a collection chamber 24 and a fire prevention chamber 25. The isolation member 22 may be plate-shaped. The collection chamber 24 and the fire prevention chamber 25 are arranged in a direction perpendicular to the lower plate 23, and the fire prevention chamber 25 is located under the collection chamber 24 in the direction perpendicular to the lower plate 23, so that the fire prevention chamber 25 is close to the battery cell 3 and the collection chamber 24 is farther away from the battery cell 3.

For example, an edge of the upper plate 21 extends toward a side at which the box housing 1 is located to form a side plate 212, and the side plate 212 is combined with the lower plate 23 to form a chamber. For example, the side plate 212 is welded to the lower plate 23, the fire prevention chamber 25 is formed between the isolation member 22 and the lower plate 23, and the collection chamber 24 is formed between the isolation member 22 and the upper plate 21. The isolation member 22 is a chamber wall shared by the fire prevention chamber 25 and the collection chamber 24, and is used to isolate the fire prevention chamber 25 from the collection chamber 24. The isolation member 22 isolating the fire prevention chamber 25 from the collection chamber 24 means separating the two cavities, and whether the fire prevention chamber 25 and the collection chamber 24 communicate with each other is not limited. For example, the fire prevention chamber 25 and the collection chamber 24 may communicate with each other through a through hole of the isolation member 22. Alternatively, the fire prevention chamber 25 and the collection chamber 24 may not communicate with each other, for example, the isolation member 22 does not have a through hole. Both the isolation member 22 and the edge of the lower plate 23 may be connected to the side plate 212 through bonding or welding.

The fire prevention chamber 25 accommodates a fire prevention medium. The fire prevention medium may be a liquid fire extinguishing agent such as water or liquid nitrogen, or a solid powder fire extinguishing agent such as a dry powder fire extinguishing agent, a fluoroprotein foam fire extinguishing agent, or aqueous film-forming foam fire extinguishing agent. For example, liquid water capable of rapidly cooling the battery cell 3 in thermal runaway, with a larger specific heat capacity, lower costs, and lower storage requirements is used as the fire prevention medium. In a normal state of the battery 200, the lower plate 23 is in a closed state with the side plate 212 of the upper plate 21 to store water.

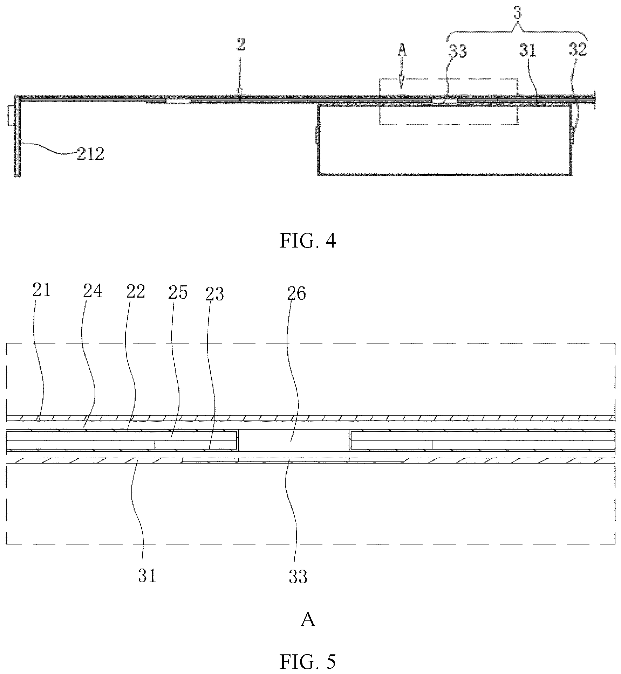

Referring to FIG. 4 and FIG. 5, the pressure relief mechanism 33 of the battery cell 3 is disposed opposite the fire prevention chamber 25, so that the fire prevention medium can enter the battery cell 3 more accurately, to prevent generation of the heat and emissions inside the battery cell 3 in thermal runaway at a faster speed, and prevent thermal diffusion.

When the fire prevention medium is a liquid fire extinguishing agent, in order to protect the electrode terminal 32 of the battery cell 3 and a bus component (not shown) connected to the electrode terminal 32, and prevent the fire prevention medium from being sprayed on the electrode terminal 32 and the bus component to cause short circuit or even more severe accidents, referring to FIG. 1 and FIG. 3, the electrode terminal 32 and the pressure relief mechanism 33 of the battery cell 3 in this embodiment of this application are located on different faces of the battery cell 3. For example, the electrode terminal 32 and the pressure relief mechanism 33 are located on two mutually perpendicular faces of the battery cell 3. For example, a face of the battery cell 3 on which the pressure relief mechanism 33 is disposed may be referred to as an upper surface of the battery cell 3, and a face of the battery cell 3 on which the electrode terminal 32 is disposed may be referred to as a side surface of the battery cell 3. The upper surface and the side surface are perpendicular to each other. The bus component connected to the battery cell 3 is also located on the side surface of the battery cell 3. In this way, it is ensured that the fire prevention medium may not be sprayed onto the electrode terminal 32 and the bus component, thereby ensuring safety during the fire prevention process.

Referring to FIG. 5, in order to extinguish and cool the battery cell 3 in thermal runaway as soon as possible when the pressure relief mechanism 33 ejects emissions, the entire lower plate 23 or at least a position, directly opposite the pressure relief mechanism 33, of the lower plate 23 is configured as a structure that is easy to be damaged by the emissions, and a form of "damage" herein includes but is not limited to one of being penetrated, cracked, broken, and torn. In this embodiment of this application, the position, directly opposite the pressure relief mechanism 33, of the lower plate 23 is constructed as a weak structure or a low melting point structure that is easy to be melted by the high-temperature and high-pressure emissions generated inside the battery cell 3. In this way, when the high-temperature and high-pressure emissions are released from the actuated pressure relief mechanism 33, the emissions quickly melt the lower plate 23, and the chamber wall of the fire prevention chamber 25 opposite the pressure relief mechanism 33 is damaged to release the fire prevention medium from the fire prevention chamber 25. The fire prevention medium enters the battery cell 3 through the pressure relief mechanism 33, so as to implement fire extinguishing and cooling for the battery cell 3 in thermal runaway.

That the position, directly opposite the pressure relief mechanism 33, of the lower plate 23 is constructed as a weak structure may mean that a strength of the position may be less than a strength of the rest of the lower plate 23, for example, a thickness of the position is less than a thickness of the rest of the lower plate 23; or the position is a through hole.

That the position, directly opposite the pressure relief mechanism 33, of the lower plate 23 is constructed as a low melting point structure may mean that a melting point of the position may be lower than a melting point of the rest of the lower plate 23.

In some other embodiments of this application, the position, directly opposite the pressure relief mechanism 33, of the lower plate 23 may alternatively be constructed as a sheet-like structure connected to the rest of the lower plate 23 by an easy-to-tear line, so as to be broken by the emissions discharged by the pressure relief mechanism 33 to release the fire prevention medium. The fire prevention medium enters the battery cell 3 through the pressure relief mechanism 33, so as to implement fire extinguishing and cooling for the battery cell 3 in thermal runaway.

The "easy-to-tear line" mentioned in this embodiment of this application is a discontinuous scribe line formed by intermittently scribing, by external force, a line between a part that needs to be torn and another part that does not need to be torn. A damaged position of the material is light and thin but does not penetrate, and can be broken by slight external force, and an undamaged position of the material retains an original material thickness. Such a line formed by intermittently scribing is referred to as an easy-to-tear line. The easy-to-tear line may be formed by a laser punching machine, a laser marking machine, a laser scribing machine or a laser cutting machine.

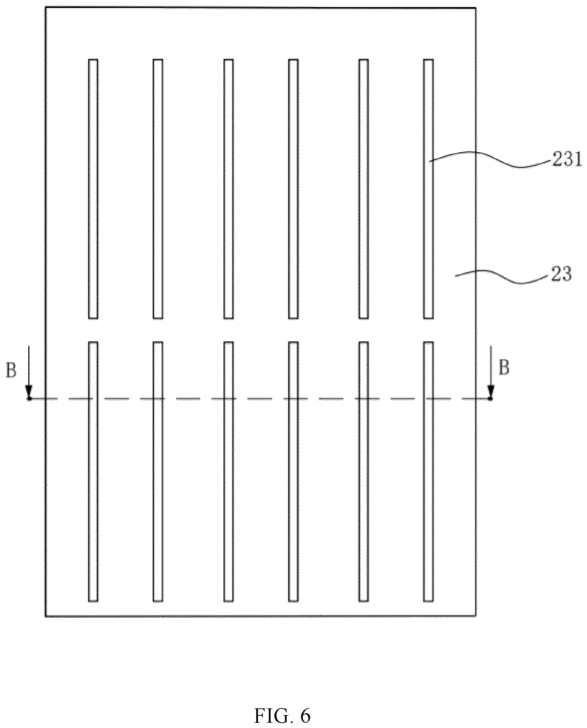

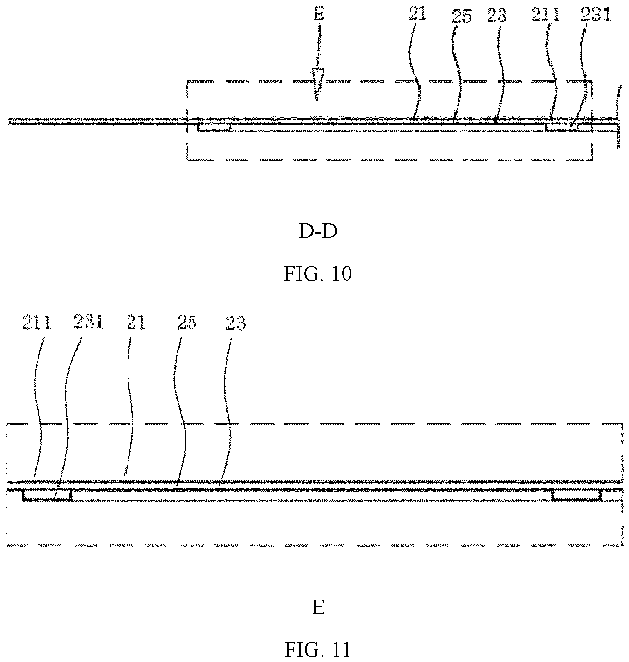

Referring to FIG. 6 to FIG. 11, in order to make the fire prevention chamber 25 easier to be damaged during actuation of the pressure relief mechanism 33, and to make the fire prevention medium in the fire prevention chamber 25 easier to flow into the battery cell 3, the lower plate 23 acting as the chamber wall of the fire prevention chamber 25 is provided with an accommodating recess 231. The accommodating recess 231 is formed by recessing the lower plate 23 towards a side of the battery cell 3. A surface of the lower plate 23 farther away from the battery cell 3 is recessed to form the accommodating recess 231. An opening of the accommodating recess 231 faces toward the isolation member 22, and a thickness of the accommodating recess 231 is less than a thickness of the rest of the lower plate 23, so that the accommodating recess 231 can be easily damaged by the emissions of the battery cell 3. One or more accommodating recesses 231 are provided, and each accommodating recesses 231 is disposed opposite at least one pressure relief mechanism 33.

In the structure of the fire prevention chamber 25, the accommodating recess 231 has a relatively short distance from the pressure relief mechanism 33 and is relatively thin and weak, so that the accommodating recess 231 can be rapidly melt and damaged during actuation of the pressure relief mechanism 33 by the emissions generated by the battery cell 3, to release the fire prevention medium for fire extinguishing and cooling and prevent thermal diffusion. In addition, after the accommodating recess 231 is damaged, the accommodating recess 231 can also play a guiding role to guide the fire prevention medium to flow from the fire prevention chamber 25 to the accommodating recess 231, the damaged part of the accommodating recess 231, and then the battery cell 3 as soon as possible, thereby achieving an effect of quickly suppressing thermal runaway.

Referring to FIG. 6 to FIG. 8, when there are two or more accommodating recesses 231, adjacent two accommodating recesses 231 may be independent and separated from each other, and a fire prevention medium inside each accommodating recess 231 circulates inside the accommodating recess 231, so that a specific amount of fire prevention medium in each accommodating recess 231 can be maintained.

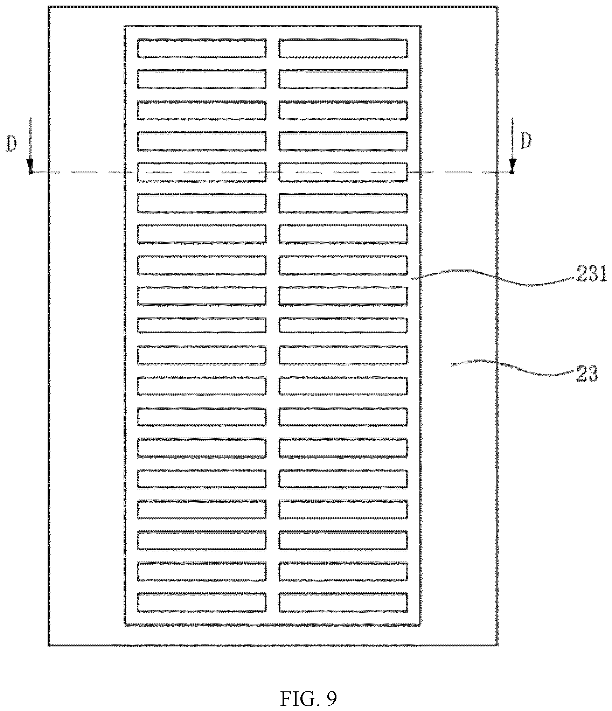

In addition, referring to FIG. 9 to FIG. 11, when there are two or more accommodating recesses 231, two adjacent accommodating recesses 231 may communicate with each other. For example, two adjacent accommodating recesses 231 may communicate with each other through a guiding groove. An opening direction of the guiding groove is the same as an opening direction of the accommodating recess 231, so that the fire prevention medium inside different accommodating recesses 231 may circulate in between. When one pressure relief mechanism 33 corresponding to one accommodating recess 231 is actuated, the fire prevention medium inside all accommodating recesses 231 flows to the pressure relief mechanism 33, ensuring sufficient supply of the fire prevention medium.

At the moment when the chamber wall of the fire prevention chamber 25 is damaged and in a short time thereafter, the battery cell 3 in thermal runaway generates heat and emissions that are released through the pressure relief mechanism 33, and the heat and emissions fill the fire prevention chamber 25.

In order to prevent the heat and emissions from causing an increase in air pressure of the fire prevention chamber 25 to result in bulging or even an explosion in a severe case, in this embodiment of this application, the collection chamber 24 is disposed in a side of the fire prevention chamber 25 farther away from the battery cell 3, and the isolation member 22 is constructed as a structure through which the emissions can pass during actuation of the pressure relief mechanism 33, so that the emissions enter the collection chamber 24 through the fire prevention chamber 25 to relieve excessively high air pressure in the fire prevention chamber 25 and avoid severe safety accidents.

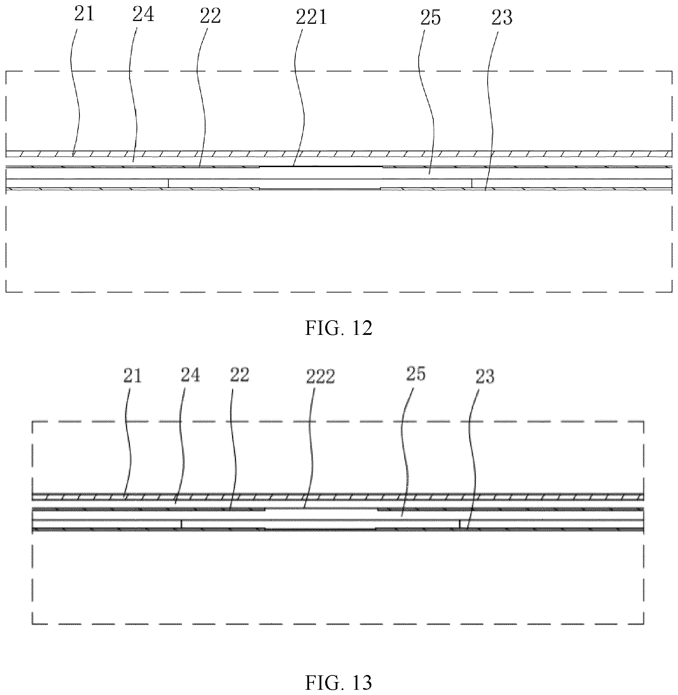

Referring to FIG. 12, in the battery 200 disclosed in an embodiment of this application, the isolation member 22 is constructed to be damaged by the emissions during actuation of the pressure relief mechanism 33, so that the emissions enter the collection chamber 24 through the fire prevention chamber 25. A form of "damage" herein includes but is not limited to one of being penetrated, cracked, broken, and torn.

For example, the isolation member 22 includes at least one weak portion 221, and the weak portion 221 is disposed opposite the pressure relief mechanism 33. In this embodiment, the weak portion 221 is a weak structure or a structure with a low melting point that can be easily melted or broken through by the high-temperature and high-pressure emissions generated inside the battery cell 3. For example, the weak portion 221 is a part of the isolation member 22, and a strength of the weak portion 221 is less than that of the rest of the isolation member 22. For example, a thickness of the weak portion 221 is less than that of the rest of the isolation member 22. Alternatively, the weak portion 221 is connected to the rest of the isolation member 22 by using an easy-to-tear line, so that after the high-temperature and high-pressure emissions damage the lower plate 23, when the fire prevention chamber 25 discharges the fire prevention medium, the emissions quickly damage the weak portion 221 through melting or high-pressure breaking through, and enters the collection chamber 24. The collection chamber 24 can release the pressure of the emissions in the fire prevention chamber 25 to avoid bulging and explosion of the battery 200, thereby improving use safety of the battery 200.

Referring to 13, the battery 200 disclosed in another embodiment of this application is basically the same as the battery in the foregoing embodiment, and the difference lies in a different structure of the isolation member 22.

For example, the isolation member 22 in this embodiment is provided with a through hole 222, and the fire prevention chamber 25 communicates with the collection chamber 24 by using the through hole 222, so as to allow the emissions to pass through the isolation member 22 through the through hole 222 after damaging the chamber wall of the fire prevention chamber 25 and enter the collection chamber 24.

In this embodiment, the through hole 222 is disposed opposite the pressure relief mechanism 33, so that the emissions can directly enter the collection chamber 24 quickly through the fire prevention chamber 25, to relieve the pressure of the fire prevention chamber 25.

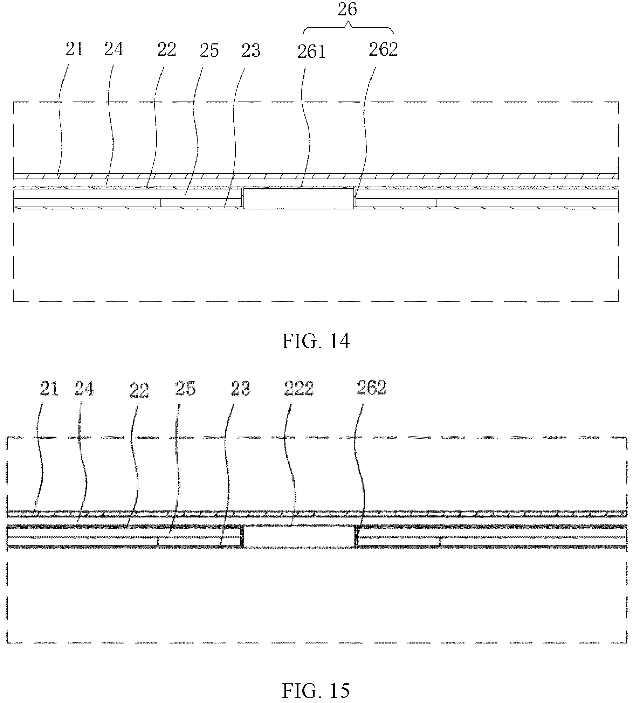

Referring to FIG. 14, another embodiment of this application is basically the same as other embodiments. The difference lies in that a discharge channel 26 is also provided between the isolation member 22 and the lower plate 23. The discharge channel 26 is used to quickly guide the emissions into the collection chamber 24, the discharge channel 26 is disposed opposite the pressure relief mechanism 33, and each discharge channel 26 corresponds to one or more pressure relief mechanisms 33, for example, one discharge channel 26 corresponds to a pressure relief mechanism 33 of one battery cell 3 or pressure relief mechanisms 33 of a plurality of battery cells 3.

The discharge channel 26 in this embodiment is constructed as a groove, and an opening of the groove is disposed toward the pressure relief mechanism 33. A specific structure of the groove is as follows: the groove has a bottom wall 261 and a side wall 262 connected to the bottom wall 261. The bottom wall 261 is constructed as at least part of the isolation member 22, and the side wall 262 is constructed as at least part of the fire prevention chamber 25, and is configured to separate the fire prevention chamber 25 from the discharge channel 26. The bottom wall 261 is disposed opposite the pressure relief mechanism 33, and the bottom wall 261 herein is constructed to have the same structure as the weak portion 221 in the embodiment described above. The side wall 262 extends toward the pressure relief mechanism 33, and the side wall 262 and the bottom wall 261 in this embodiment are directly connected, and one end of the side wall 262 farther away from the bottom wall 261 abuts against the lower plate 23.

The fire prevention chamber 25 is damaged by the emissions when the emissions pass through the discharge channel 26, and discharges the fire prevention medium. At the same time, the emissions enter the discharge channel 26 through the opening of the discharge channel 26 and damage the bottom wall 261 of the groove. The discharge channel 26 is used to guide the emissions to pass through the isolation member 22 and enter the collection chamber 24, thereby implementing collection of the emissions.

Referring to FIG. 15, another embodiment of this application is basically the same as the foregoing embodiments. The difference lies in that: the discharge channel 26 in this embodiment is constructed to have only the side wall 262 that is connected to a side of the lower plate 23 farther away from the battery cell 3. The side wall 262 extends in a direction leaving the battery cell 3. The isolation member 22 uses the same structure with the through hole 222 as that in the embodiment described above, and the side wall 262 abuts against an edge of the through hole 222 or is inserted into the through hole 222, so as to hermetically seal the fire prevention chamber 25.

The fire prevention chamber 25 is damaged by the emissions when the emissions pass through the discharge channel 26, and discharges the fire prevention medium. At the same time, the emissions enter the discharge channel 26 through a region enclosed by the side wall 262, and enters the collection chamber 24 through the through hole 222 in the isolation member 22, so as to implement collection of the emissions.

Referring to FIG. 1 and FIG. 2, in the foregoing embodiments, the collection chamber 24 may also be saturated with air pressure. Therefore, the cover body 2 may be provided with a pressure-actuated valve 27 such as an explosion-proof valve, an air valve, a pressure relief valve, or a safety valve. The pressure-actuated valve 27 is configured to discharge the emissions that are collected in the collection chamber 24 during thermal runaway of the battery cell 3 to the outside of the battery 200, so as to improve use safety of the battery 200.

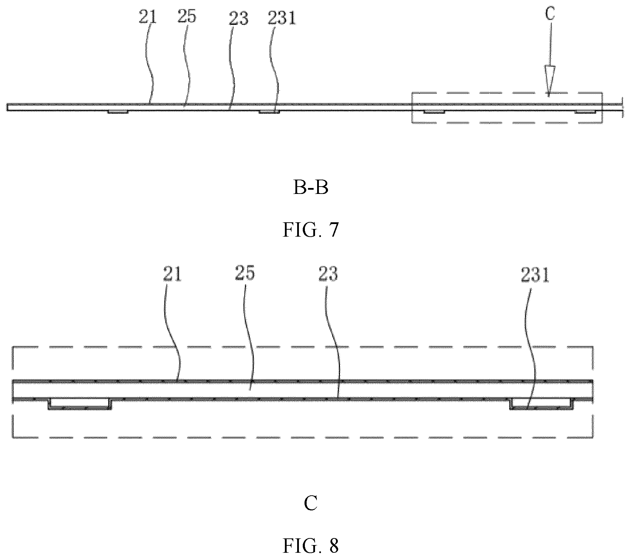

In addition, referring to FIG. 8, FIG. 9, and FIG. 10, in order to prevent the upper plate 21 of the cover body 2 from being broken through by the high-temperature and high-pressure emission, a reinforcing plate 211 is provided on the upper plate 21. The reinforcing plate 211 may be constructed as a thickened structure integrated with the upper plate 21; or may be constructed as a reinforcing structure welded, bonded, or screwed to the upper plate 21. The reinforced plate 211 may be a metal plate or a lightweight refractory plate such as a mica plate, a rock wool plate, a floating bead plate, or a vermiculite plate. The reinforcing plate 211 may be disposed inside the cover body 2 or outside the cover body 2; the reinforcing plate 211 may cover the entire upper plate 21 or may be disposed only on a position, relative to the accommodating recess 231 of the lower plate 23, of the upper plate 21. The figure is only a schematic diagram in which the reinforcing plate 211 may be disposed only on the position, relative to the accommodating recess 231 of the lower plate 23, of the upper plate 21, and is disposed on the outside of the cover body 2. Other disposition statuses of the reinforcing plate 211 are not shown in the figure, and can be properly deduced therefrom by those skilled in the art, and therefore are no longer shown in the figure.

The upper plate 21 of the cover body 2 is reinforced, and therefore is not easy to be broken through by the emissions, ensuring use safety of the battery 200.

In another embodiment of this application, the fire prevention medium in the fire prevention chamber 25 may be pre-filled in the fire prevention chamber 25.

In another embodiment of this application, the battery 200 further includes a thermal management component (not shown in the figure) configured to adjust a temperature of the battery cell 3, and the thermal management component is constructed to communicate with the fire prevention chamber 25, so as to deliver the fire prevention medium to the fire prevention chamber 25. The fire prevention medium can not only control the temperature of the battery cell 3 through the thermal management component, but also can be delivered to the fire prevention chamber 25 through the thermal management component during thermal runaway of the battery cell 3, so as to ensure sufficient supply of the fire prevention medium.

The thermal management component is generally disposed at the bottom of the battery cell 3 and is configured to adjust the temperature of the battery cell 3. For example, the thermal management component is configured to decrease or increase the temperature of the battery cell 3 to a preset temperature. In a case of cooling or lowering the temperature of the battery cell 3, the thermal management component is configured to accommodate a cooling fluid to lower the temperature of the plurality of battery cells 3. In this case, the thermal management component may also be referred to as a cooling component, a cooling system, or a cooling system. The fluid accommodated therein may also be referred to as a cooling medium or a cooling fluid, more specifically, may be referred to as a cooling liquid or a cooling gas; or the fluid accommodated therein may be directly a fire prevention medium, where the fluid herein may be set to circulate. In addition, the thermal management component may alternatively be used for heating to increase the temperature of the plurality of battery cells 3, which is not limited in this embodiment of this application.

For example, the thermal management component includes a connecting pipe, and the connecting pipe extends through the box body to the outside of the box housing 1, and is connected to a liquid storage container (not shown in the figure) provided outside the battery 200. The liquid storage container contains the fire prevention medium, where the thermal management component and the liquid storage container form a circulation loop through the connecting pipe. The thermal management component is constructed to communicate with the fire prevention chamber 25. For example, the thermal management component communicates with the fire prevention chamber 25 through a pipe, or the thermal management component, the fire prevention chamber 25, and the connecting pipe communicate with each other through a tee.

When the thermal management component needs to reduce the temperature of the battery cell 3, a lower-temperature fire prevention medium circulates between the liquid storage container and the thermal management component through the connecting pipe, to reduce the temperature of the battery cell 3. When the thermal management component needs to increase the temperature of the battery cell 3, a higher-temperature fire prevention medium may be filled in the liquid storage container, and the fire prevention medium circulates between the liquid storage container and the thermal management component through the connecting pipe, so as to increase the temperature of the battery cell 3, thereby implementing adjustment of the temperature of the battery cell 3 and ensuring that the battery cell 3 works at a predetermined temperature to ensure use performance of the battery 200.

To sum up, the battery 200 provided in this application is provided with the fire prevention chamber 25 and the collection chamber 24 that are adjacent in the cover body 2. The collection chamber 24 is capable of releasing the pressure from the fire prevention medium in the fire prevention chamber 25, so as to prevent bulging or even explosion of the fire prevention chamber 25 caused by continuous thermal runaway of the battery cell 3. In this way, the battery 200 in the embodiments of this application can control thermal runaway of the battery cell 3 in a timely manner to avoid further generating heat and high-temperature emissions. In addition, pressure release is implemented for the heat and emissions already generated by the battery cell 3, to avoid explosions caused by continuous accumulation of the heat and emissions in the box body and further avoid safety accidents.

The battery 200 in this application has the foregoing characteristics; therefore, the electric apparatus that uses the battery 200 provided in this application to provide electrical energy is not prone to safety accidents caused by battery explosions, ensuring higher use safety.

In addition, this application further provides a method for preparing battery, used to manufacture the foregoing battery 200 in this application.

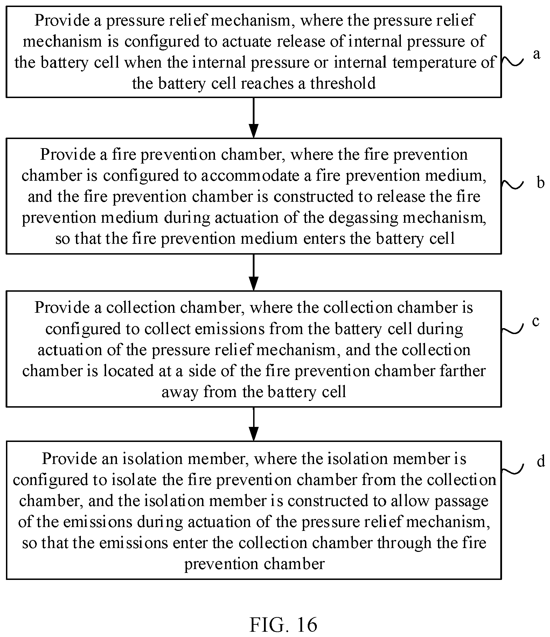

Referring to FIG. 16, in an embodiment of this application, a method for preparing battery 200 includes the following steps.

Step a: Provide a battery cell 3, where there may be one or more battery cells 3. The battery cell 3 includes a pressure relief mechanism 6, and the pressure relief mechanism 6 is configured to actuate release of internal pressure of the battery cell when the internal pressure or internal temperature of the battery cell 3 reaches a threshold.

Step b: Provide a fire prevention chamber 25, where the fire prevention chamber 25 is configured to accommodate a fire prevention medium, and in some embodiments, the fire prevention chamber 25 is constructed to release the fire prevention medium during actuation of the pressure relief mechanism 33, so that the fire prevention medium enters the battery cell 3.

Step c: Provide a collection chamber 24, where the collection chamber 24 is configured to collect emissions from the battery cell 3 during actuation of the pressure relief mechanism 33, where the collection chamber 24 is located at a side of the fire prevention chamber 25 farther away from the battery cell 3.

Step d: Provide an isolation member 22, where the isolation member 22 is configured to isolate the fire prevention chamber 25 from the collection chamber 24.

The isolation member 22 is constructed to allow passage of the emissions during actuation of the pressure relief mechanism 33, so that the emissions enter the collection chamber 24 through the fire prevention chamber 25.

The foregoing steps are not necessarily performed completely in the order described above. In an actual manufacturing process of the battery 200, the sequence of the steps may be adjusted according to actual situations, or the steps may be performed simultaneously, or other steps may be added to manufacture other parts of the battery 200, so as to finally obtain the battery 200 as required. For details, refer to the embodiment of the battery 200.

Any methods for manufacturing related components and connecting related components fall within the protection scope of the embodiments of this application, and details are not described in the embodiments of this application.

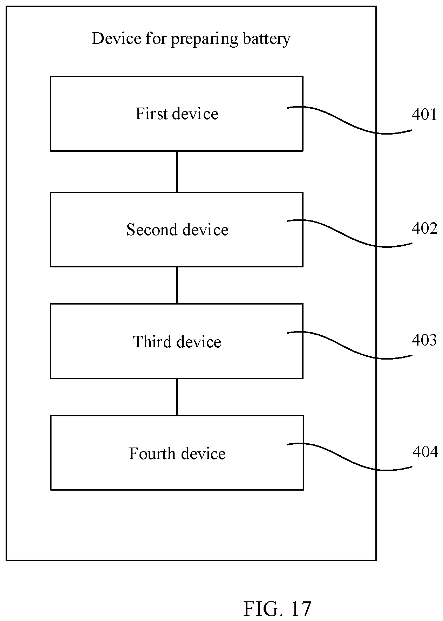

A fourth aspect of this application provides a device for preparing battery. Referring to FIG. 17, the device for preparing battery includes:
a first device 401, configured to provide a battery cell 3, where the battery cell 3 includes a pressure relief mechanism 33, and the pressure relief mechanism 33 is configured to actuate release of internal pressure of the battery cell when the internal pressure or internal temperature of the battery cell 3 reaches a threshold;
a second device 402, configured to provide a fire prevention chamber 25, where the fire prevention chamber 25 is configured to accommodate a fire prevention medium, and the fire prevention chamber 25 is constructed to release the fire prevention medium during actuation of the pressure relief mechanism 33, so that the fire prevention medium enters the battery cell 3;
a third device 403, configured to provide a collection chamber 24, where the collection chamber 24 is configured to collect emissions from the battery cell 3 during actuation of the pressure relief mechanism 33, and the collection chamber 24 is located at a side of the fire prevention chamber 25 farther away from the battery cell 3; and
a fourth device 404, configured to provide an isolation member 22, where the isolation member 22 is configured to isolate the fire prevention chamber 25 from the collection chamber 24.

The isolation member 22 provided by the fourth device 404 is constructed to allow passage of the emissions during actuation of the pressure relief mechanism 33, so that the emissions enter the collection chamber 24 through the fire prevention chamber 25.

Specific functions and details necessary for the devices for preparing battery 200 have been described in detail in the corresponding embodiment of the battery 200, and details are not repeated herein.

The foregoing protection subjects of this application and the features in the embodiments can be used for reference. If the structure allows, those skilled in the art can also flexibly combine the technical features in the different embodiments to form more embodiments.

The battery, the electric apparatus, and the method and device for preparing battery provided by this application are described in detail above. Specific embodiments are used in this specification to describe the principles and implementations of the application, and the descriptions of the foregoing embodiments are merely intended to help understand the method and core ideas of this application. It should be noted that those of ordinary skill in the art may further make several improvements and modifications to this application without departing from the principles of this application, and these improvements and modifications also fall within the protection scope of the claims of this application.

## Claims

1. A battery, comprising:
a battery cell (3), wherein the battery cell (3) comprises a pressure relief mechanism (33), and the pressure relief mechanism (33) is configured to actuate release of internal pressure of the battery cell (3) when the internal pressure or internal temperature of the battery cell (3) reaches a threshold;
a fire prevention chamber (25), configured to accommodate a fire prevention medium, wherein the fire prevention chamber (25) is constructed to release the fire prevention medium during actuation of the pressure relief mechanism (33), so that the fire prevention medium enters the battery cell (3);
a collection chamber (24), configured to collect emissions from the battery cell (3) during actuation of the pressure relief mechanism (33), wherein the collection chamber (24) is located at a side of the fire prevention chamber (25) farther away from the battery cell (3); and
an isolation member (22), configured to isolate the fire prevention chamber (25) from the collection chamber (24); wherein
the isolation member (22) is constructed to allow passage of the emissions during actuation of the pressure relief mechanism (33), so that the emissions enter the collection chamber (24) through the fire prevention chamber (25).

2. The battery according to claim 1, wherein the isolation member (22) is constructed to be damaged by the emissions during actuation of the pressure relief mechanism (33), so that the emissions enter the collection chamber (24) through the fire prevention chamber (25).

3. The battery according to claim 2, wherein the isolation member (22) is provided with a weak portion (221), and the weak portion (221) is constructed to be damaged by the emissions during actuation of the pressure relief mechanism (33).

4. The battery according to claim 1, wherein the isolation member (22) is provided with a through hole (222), and the through hole (222) is constructed to allow the emissions to pass through the isolation member (22).

5. The battery according to any one of claims 1 to 4, wherein the isolation member (22) is constructed as a chamber wall that is shared by the fire prevention chamber (25) and the collection chamber (24).

6. The battery according to any one of claims 1 to 5, wherein the battery further comprises:
a box housing (1), configured to accommodate the battery cell (3); and
a cover body (2), configured to connect to the box housing (1) to encapsulate the battery cell (3); wherein
the fire prevention chamber (25), the collection chamber (24), and the isolation member (22) are constructed as at least part of the cover body (2).

7. The battery according to claim 6, wherein the cover body (2) is provided with a discharge channel (26), and the discharge channel (26) is configured to guide the emissions to pass through the isolation member (22) and enter the collection chamber (24).

8. The battery according to claim 7, wherein the fire prevention chamber (25) is constructed to be damaged by the emissions when the emissions pass through the discharge channel (26), so as to release the fire prevention medium.

9. The battery according to claim 7 or 8, wherein the discharge channel (26) is constructed as a groove, an opening of the groove is provided facing toward the pressure relief mechanism (33), and the emissions pass through the opening to enter the discharge channel (26).

10. The battery according to claim 9, wherein the groove has a bottom wall (261) and a side wall (262) connected to the bottom wall (261), the bottom wall (261) is disposed opposite the pressure relief mechanism (33), and the side wall (262) extends toward the pressure relief mechanism (33).

11. The battery according to claim 10, wherein the bottom wall (261) is constructed as at least part of the isolation member (22), and the side wall (262) is constructed as at least part of a chamber wall of the fire prevention chamber (25).

12. The battery according to any one of claims 1 to 11, wherein the fire prevention chamber (25) is constructed to be damaged by the emissions during actuation of the pressure relief mechanism (33), so as to release the fire prevention medium.

13. The battery according to any one of claims 1 to 12, wherein the fire prevention chamber (25) comprises an accommodating recess (231) disposed opposite the pressure relief mechanism (33), and the accommodating recess (231) is formed by recessing a chamber wall of the fire prevention chamber (25) facing toward the pressure relief mechanism (33), so that the fire prevention medium flows toward the accommodating recess (231) during actuation of the pressure relief mechanism (33).

14. The battery according to claim 13, wherein at least two accommodating recesses (231) are provided, and two adjacent accommodating recesses (231) communicate with each other.

15. The battery according to any one of claims 1 to 14, wherein the battery further comprises a thermal management component configured to adjust a temperature of the battery cell (3), and the thermal management component is constructed to communicate with the fire prevention chamber (25), so as to deliver the fire prevention medium to the fire prevention chamber (25).

16. An electric apparatus, comprising the battery according to any one of claims 1 to 15, wherein the battery is configured to provide electrical energy.

17. A method for preparing battery, comprising:
providing a battery cell (3), wherein the battery cell (3) comprises a pressure relief mechanism (33), and the pressure relief mechanism (33) is configured to actuate release of internal pressure of the battery cell when the internal pressure or internal temperature of the battery cell (3) reaches a threshold;
providing a fire prevention chamber (25), wherein the fire prevention chamber (25) is configured to accommodate a fire prevention medium, and the fire prevention chamber (25) is constructed to release the fire prevention medium during actuation of the pressure relief mechanism (33), so that the fire prevention medium enters the battery cell (3);
providing a collection chamber (24), wherein the collection chamber (24) is configured to collect emissions from the battery cell (3) during actuation of the pressure relief mechanism (33), and the collection chamber (24) is located at a side of the fire prevention chamber (25) farther away from the battery cell (3); and
providing an isolation member (22), wherein the isolation member (22) is configured to isolate the fire prevention chamber (25) from the collection chamber (24); wherein
the isolation member (22) is constructed to allow passage of the emissions during actuation of the pressure relief mechanism (33), so that the emissions enter the collection chamber (24) through the fire prevention chamber (25).

18. A device for preparing battery, comprising:
a first device, configured to provide a battery cell (3), wherein the battery cell (3) comprises a pressure relief mechanism (33), and the pressure relief mechanism (33) is configured to actuate release of internal pressure of the battery cell when the internal pressure or internal temperature of the battery cell (3) reaches a threshold;
a second device, configured to provide a fire prevention chamber (25), wherein the fire prevention chamber (25) is configured to accommodate a fire prevention medium, and the fire prevention chamber (25) is constructed to release the fire prevention medium during actuation of the pressure relief mechanism (33), so that the fire prevention medium enters the battery cell (3);
a third device, configured to provide a collection chamber (24), wherein the collection chamber (24) is configured to collect emissions from the battery cell (3) during actuation of the pressure relief mechanism (33), and the collection chamber (24) is located at a side of the fire prevention chamber (25) farther away from the battery cell (3); and
a fourth device, configured to provide an isolation member (22), wherein the isolation member (22) is configured to isolate the fire prevention chamber (25) from the collection chamber (24); wherein
the isolation member (22) provided by the fourth device (404) is constructed to allow passage of the emissions during actuation of the pressure relief mechanism (33), so that the emissions enter the collection chamber (24) through the fire prevention chamber (25).
